# EUROPÄISCHE PATENTSCHRIFT

(11) **EP 1 599 116 B1**
(45) Veröffentlichungstag und Bekanntmachung des Hinweises auf die Patenterteilung: **23.04.2008**
(21) Anmeldenummer: 04712030.8
(22) Anmeldetag: 18.02.2004
(51) Int. Cl.: A47J 27/00, C23C 24/04

(54) **VERFAHREN ZUM HERSTELLEN EINES KOCHGESCHIRRS FÜR EINEN INDUKTIONSHERD**
METHOD FOR THE PRODUCTION OF A COOKING UTENSIL FOR AN INDUCTION HOB
PROCEDE DE PRODUCTION D'UN USTENSILE DE CUISSON POUR CUISINIERE A INDUCTION

(30) Priorität: 01.03.2003 DE 10309018
(43) Veröffentlichungstag der Anmeldung: 30.11.2005
(73) Patentinhaber: Newspray GmbH, 4310 Rheinfelden (CH)
(72) Erfinder: GRASME, Dieter, CH-4310 Rheinfelden (CH)
(74) Vertreter: Maucher, Wolfgang
(86) Internationale Anmeldenummer: PCT/EP2004/001521
(87) Internationale Veröffentlichungsnummer: WO 2004/078010

(56) Entgegenhaltungen:
- DE-A- 3 639 013
- DE-A- 4 405 101
- DE-A- 19 747 386

## Beschreibung

Die Erfindung betrifft ein Verfahren zum Herstellen eines Kochgeschirrs aus Aluminium oder einer Aluminiumlegierung für einen Induktionsherd, wobei die Bodenfläche des Kochgeschirrs mit einem ferromagnetischen Werkstoff oder mit einer ferromagnetischen Platte versehen wird. Ferner betrifft die Erfindung ein Kochgeschirr für einen Induktionsherd, welches durch ein derartiges Verfahren hergestellt ist.

Derartige Kochgeschirre sind beispielsweise als Kochtöpfe oder als Pfannen bekannt und ermöglichen die Zubereitung von Speisen mittels Induktionsherden. Da eine Erwärmung eines Kochgeschirrs durch Induktion einen ferromagnetischen Werkstoff an diesem Kochgeschirr voraussetzt, das Kochgeschirr aber wegen eines möglichst geringen Gewichts aus Aluminium oder einen Aluminiumlegierung bestehen soll, ist das Anbringen einer solchen ferromagnetischen Schicht am Boden des Kochgeschirrs bisher aufwendig und nur bei geschmiedeten oder aus Walzprodukten gefertigten Kochgeschirren durch Aufschmieden möglich. Der Stand der Technik ergibt sich aus den Dokumenten DE 4405101 A und DE 19747386 A.

Es besteht deshalb die Aufgabe, ein Verfahren und auch ein Kochgeschirr der eingangs genannten Art zu schaffen, womit das Anbringen einer ferromagnetischen Schicht preiswerter und auch bei einem gegossenem Kochgeschirr möglich ist.

Zur Lösung dieser Aufgabe ist das eingangs definierte Verfahren dadurch gekennzeichnet, dass an der Unterseite des Bodens des Kochgeschirrs wenigstens bereichsweise eine ferromagnetische Schicht im Kaltgasspritzverfahren angebracht oder ein Lot oder eine lötfähige Metallschicht im Kaltgasspritzverfahren aufgetragen und eine ferromagnetische Platte angelötet wird und dass die durch Kaltspritzverfahren aufgebrachte Schicht unmittelbar auf die geglättete Bodenfläche aufgespritzt wird.

Versuche haben gezeigt, dass im Kaltgasspritzverfahren derartige Metalle eine gute Haftung an Aluminium haben unabhängig davon, ob das Kochgeschirr aus Aluminium oder einer Aluminiumlegierung geschmiedet oder gegossen ist, obwohl immer mit einer Oxidschicht an der Oberfläche des Aluminiumbodens gerechnet werden muss. Überraschend ist dabei vor allem die Lösung, bei welcher eine lötfähige Metallschicht im Kaltgasspritzverfahren aufgetragen wird, die anschließend ein Anlöten einer Platte aus ferromagnetischem Werkstoff in beliebiger Dicke, Form und Größe erlaubt.

Die durch das Kaltgasspritzverfahren aufgebrachte Schicht wird unmittelbar auf die geglättete Bodenfläche aufgespritzt. Also wird eine beim thermischen Spritzen erforderliche vorhergehende Sandstrahlung der Oberfläche zur Vorbereitung des Spritzvorgangs vermieden und eingespart.

Als Lot kann zum Beispiel eine Zink-Aluminium-Legierung oder eine Zink-Aluminium-Kupferlegierung gewählt werden, da ein derartiges Lot eine relativ hohe Schmelztemperatur von 540° bis 560°C hat, was bei der Anwendung des Kochgeschirrs während des Kochens wichtig ist.

Als lötfähiges Metall kann Kupfer, Messing, Bronze zinn oder eine zinnlegierung aufgespritzt werden. Somit stehen unterschiedliche Materialien zur Verfügung, um den anschließenden Lötvorgang zum Befestigen der ferromagnetischen Platte vorzubereiten.

Dabei kann die gesamte Bodenfläche mit dem Lot oder dem lötfähigen Material oder unmittelbar mit dem ferromagnetischen Werkstoff durch Kaltgasspritzen beschichtet werden. Eine entsprechend gute Wärmeübertragung auf das Innere des Kochgeschirrs ist möglich.

Es hat sich gezeigt, dass schon eine Schichtdicke von einem halben Millimeter oder weniger, beispielsweise von etwa drei Zehntel Millimeter eine ausreichende Induktionserwärmung ermöglicht. Durch eine übliche Korrosionsschutzschicht kann die Lebensdauer erhöht werden.

Eine abgewandelte Ausführungsform kann jedoch auch vorsehen, dass die im Kaltgasspritzverfahren aufgebrachte Metallschicht und/oder die angelötete ferromagnetische Platte nur auf Teilbereiche des Bodens aufgebracht und andere Bereiche davon freigelassen werden. Dadurch können erforderlichenfalls Wärmebewegungen kompensiert werden.

Beispielsweise können mehrere plattenförmige Stücke aus ferromagnetischem Werkstoff an die im Kaltgasspritzverfahren aufgebrachte lötfähige Metallschicht angelötet werden und insgesamt eine mehrstückige Platte aus magnetischem Werkstoff bilden, um vor allem Wärmebewegungen kompensieren zu können.

Ein erfindungsgemäßes Kochgeschirr für einen Induktionsherd, welches durch das vorbeschriebene Verfahren hergestellt ist, kann zur Lösung der Aufgabe dadurch gekennzeichnet sein, dass an der Unterseite eines Bodens eine durch Kaltgasspritzen angebrachte ferromagnetische Schicht ausreichender Dicke oder eine durch Kaltgasspritzen angebrachte Schicht aus einem Lot oder aus einem lötfähigen Werkstoff vorgesehen ist, an der eine Platte oder Plattenstücke aus ferromagnetischem Werkstoff angelötet ist/sind. Dies ergibt ein Kochgeschirr, welches aus Aluminium oder einer Aluminiumlegierung besteht und dabei auch gegossen sein kann und dennoch für Induktionsherde geeignet ist.

Nachstehend sind Ausführungsbeispiele der Erfindung anhand der Zeichnung näher beschrieben. Es zeigt in schematisierter Darstellung:
- Fig. 1: einen Teillängsschnitt (Hälfte) eines Kochgeschirrs, beispielsweise einer Pfanne, aus Aluminium oder einer Aluminiumlegierung, an dessen Bodenseite eine lötfähige Schicht durch Kaltgasspritzen aufgebracht ist, an welcher eine Platte aus ferromagnetischem Werkstoff, nämlich aus Ferrit-Stahl, angelötet ist, sowie
- Fig. 2: einen der Figur 1 entsprechenden Schnitt eines abgewandelten Kochgeschirrs aus Aluminium oder einer Aluminiumlegierung, an dessen Bodenfläche eine Schicht aus ferromagnetischem Werkstoff oder Ferrit-Stahl unmittelbar durch Kaltgasspritzen aufgetragen ist.

Ein im Ganzen mit 1 bezeichnetes Kochgeschirr aus Aluminium oder einer Aluminiumlegierung ist dadurch für eine Verwendung auf einem Induktionsherd geeignet, dass an dem Boden 2 und dabei der unteren Bodenfläche 3 eine ferromagnetische Platte 4 vorgesehen ist.

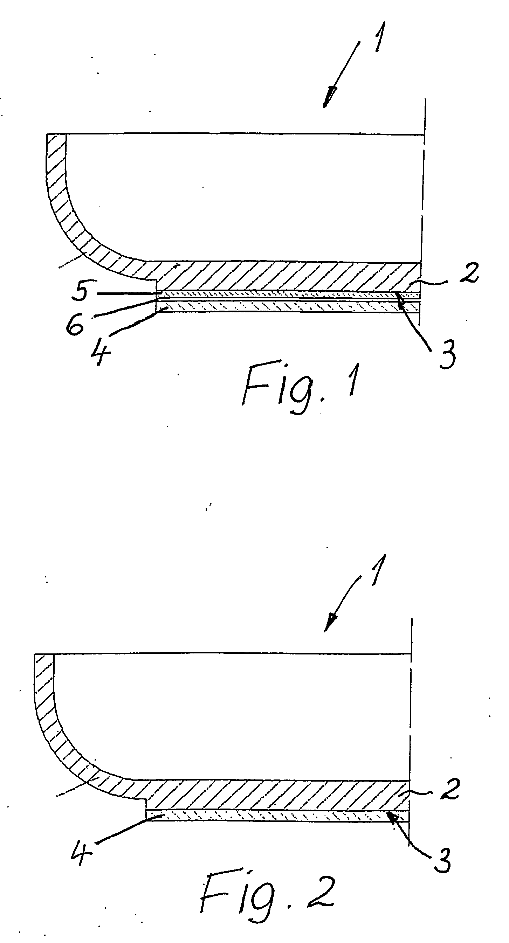

Figur 2 zeigt eine Ausführungsform, bei welcher an der Unterseite des Bodens 2 des Kochgeschirrs 1 eine ferromagnetische Schicht als Platte 4 im Kaltgasspritzverfahren unmittelbar angebracht ist.

Figur 1 zeigt ein Ausführungsbeispiel, bei welchem an der Unterseite des Bodens 2 eine lötfähige Metallschicht 5 im Kaltgasspritzverfahren aufgetragen ist, an die eine ferromagnetische Platte 4 angelötet ist, wobei zwischen der ferromagnetischen Platte 4 und der lötfähigen Metallschicht 5 in Figur 1 noch die Schicht mit dem Lot 6 angedeutet ist.

Die durch Kaltgasspritzen aufgebrachte Schicht, also entweder die ferromagnetische Platte 4 gemäß Figur 2 oder die lötfähige Metallschicht 5 gemäß Figur 1 sind dabei unmittelbar auf die zuvor geglättete Bodenfläche aufgespritzt, ohne dass vorher diese Fläche sandgestrahlt werden muss. Als lötfähiges Metall kommen dabei Kupfer, Messing, Bronze, Zinn oder auch eine Zinnlegierung in Frage.

Im Ausführungsbeispiel ist die gesamte Fläche des Bodens 2 mit dem lötfähigen Material (Fig. 1) oder unmittelbar mit dem ferromagnetischen Werkstoff (Fig. 2) durch Kaltspritzen beschichtet. Es ist aber auch möglich, die aufgebrachte Metallschicht nur auf Teilbereichen des Bodens 2 aufzubringen und andere Bereiche freizulassen, um Wärmebewegungen zum Kompensieren. Dabei kann dies entweder durch Schlitze oder Lücken innerhalb den entsprechenden Schichten oder dadurch geschehen, dass jeweils voneinander getrennte Bereiche oder Plattenstücke aus dem entsprechenden Material vorgesehen werden.

Es hat sich gezeigt, dass bei einer durch Kaltgasspritzen aufgebrachten Schicht aus ferromagnetischem Werkstoff schon eine Schichtdicke von etwa einem halben Millimeter oder weniger, beispielsweise von drei Zehntel Millimeter eine ausreichende Induktionserwärmung ermöglicht. Es ist aber auch möglich, eine Schichtdicke von mehr als einem halben Millimeter vorzusehen. Dabei kann die Lebensdauer durch eine übliche Korrosionsschutzschicht auf dieser ferromagnetischen Schicht erhöht werden.

Eine weiter abgewandelte Ausführungsform kann vorsehen, dass an der Unterseite des Bodens unmittelbar ein Lot im Kaltgasspritzverfahren aufgetragen und dann eine ferromagnetische Platte angelötet wird, sei es als durchgehende, sei es auch als unterbrochene Platte.

Zum Herstellen eines Kochgeschirrs 1 aus Aluminium oder einer Aluminiumlegierung, sei es geschmiedet, sei es gegossen, welches zur Benutzung auf einem Induktionsherd geeignet sein soll, wird an seiner Bodenfläche 3 mit einem ferromagnetischem Werkstoff oder einer ferromagnetischen Platte 4 dadurch versehen, dass an der Unterseite des Bodens 2 des Kochgeschirrs 1 wenigstens bereichsweise eine ferromagnetische Schicht ausreichender Dicke im Kaltgasspritzverfahren unmittelbar angebracht oder ein Lot oder eine lötfähige Metallschicht 5 im Kaltgasspritzverfahren aufgetragen und eine ferromagnetische Platte 4 daran angelötet wird, wobei diese Platte 4 auch aus Plattenstücken bestehen könnte.

## Patentansprüche

1. Verfahren zum Herstellen eines Kochgeschirrs (1) aus Aluminium oder einer Aluminiumlegierung für einen Induktionsherd, wobei die Bodenfläche (3) des Kochgeschirrs mit einem ferromagnetischen Werkstoff oder mit einer ferromagnetischen Platte (4) versehen wird, **dadurch gekennzeichnet, dass** an der Unterseite des Bodens (2) des Kochgeschirrs (1) wenigstens bereichsweise eine ferromagnetische Schicht im Kaltgasspritzverfahren angebracht oder ein Lot oder eine lötfähige Metallschicht (5) im Kaltgasspritzverfahren aufgetragen und eine ferromagnetische Platte (4) angelötet wird und dass die durch Kaltgasspritzverfahren aufgebrachte Schicht unmittelbar auf die geglättete Bodenfläche aufgespritzt wird.

2. Verfahren nach Anspruch 1, **dadurch gekennzeichnet, dass** als Lot eine Zink-Aluminium-Legierung oder eine Zink-Aluminium-Kupferlegierung gewählt wird.

3. Verfahren nach Anspruch 1, **dadurch gekennzeichnet, dass** als lötfähiges Metall Kupfer, Messing, Bronze, Zinn oder eine Zinnlegierung aufgespritzt wird.

4. Verfahren nach einem der Ansprüche 1 bis 3, **dadurch gekennzeichnet, dass** die gesamte Bodenfläche mit dem Lot oder dem lötfähigen Material oder unmittelbar mit dem ferromagnetischen Werkstoff durch Kaltgasspritzen beschichtet wird.

5. Verfahren nach einem der Ansprüche 1 bis 4, **dadurch gekennzeichnet, dass** die im Kaltgasspritzverfahren aufgebrachte Metallschicht und/oder die angelötete ferromagnetische Platte nur auf Teilbereiche des Bodens (2) aufgebracht und andere Bereiche davon freigelassen werden.

6. Verfahren nach einem der Ansprüche 1 bis 5, **dadurch gekennzeichnet, dass** mehrere plattenförmige Stücke aus ferromagnetischem Werkstoff an die im Kaltgasspritzverfahren aufgebrachte lötfähige Metallschicht (5) angelötet werden und insgesamt eine mehrstückige Platte (4) aus ferromagnetischem Werkstoff bilden.

7. Kochgeschirr (1) aus Aluminium oder einer Aluminiumlegierung für einen Induktionsherd, hergestellt durch ein Verfahren nach einem der Ansprüche 1 bis 6, **dadurch gekennzeichnet, dass** an der Unterseite seines Bodens (2) eine durch Kaltgasspritzen aufgebrachte ferromagnetische Schicht (4) ausreichender Dicke oder eine durch Kaltgasspritzen aufgebrachte Schicht (5) aus einem Lot oder einem lötfähigen Werkstoff vorgesehen ist, an der eine Platte (4) oder Plattenstücke aus ferromagnetischem Werkstoff angelötet ist/sind.

## Claims

1. Method of manufacturing an item of cookware (1) from aluminium or an aluminium alloy for an induction cooker, wherein the base surface (3) of the cookware is provided with a ferromagnetic material or with a ferromagnetic plate (4), **characterised in that** a ferromagnetic coating is applied to at least areas of the underside of the base (2) of the cookware (1) by the cold gas spraying method, or solder or a solderable metal coating (5) is applied by the cold gas spraying method and a ferromagnetic plate (4) is soldered on, and **in that** the coating applied by the cold gas spraying method is sprayed directly onto the smoothed base surface.

2. Method according to claim 1, **characterised in that** a zinc-aluminium alloy or a zinc-aluminium-copper alloy is used as the solder.

3. Method according to claim 1, **characterised in that** copper, brass, bronze, tin or a tin alloy is sprayed on as the solderable metal.

4. Method according to one of claims 1 to 3, **characterised in that** the entire base surface is coated with the solder or solderable material or directly with the ferromagnetic material by cold gas spraying.

5. Method according to one of claims 1 to 4, **characterised in that** the metal coating applied by the cold gas spraying method and/or the soldered-on ferromagnetic plate is applied only to certain areas of the base (2) and other areas are left exposed.

6. Method according to one of claims 1 to 5, **characterised in that** a plurality of plate-shaped sections of ferromagnetic material are soldered onto the solderable metal coating (5) applied by the cold gas spraying method and together form a multi-sectional plate (4) of ferromagnetic material.

7. Cookware (1) made of aluminium or an aluminium alloy for an induction cooker, produced by a method according to one of claims 1 to 6, **characterised in that** on the underside of its base (2) is provided a ferromagnetic coating (4) of sufficient thickness applied by cold gas spraying or a coating (5) of solder or a solderable material applied by cold gas spraying, to which a plate (4) or plate sections of ferromagnetic material is or are soldered.

## Revendications

1. Procédé de production d'un ustensile de cuisson (1) en aluminium ou en alliage d'aluminium pour une cuisinière à induction, la surface de fond (3) de l'ustensile de cuisson étant pourvue d'un matériau ferromagnétique ou d'une plaque (4) ferromagnétique, **caractérisé en ce qu'**une couche ferromagnétique est appliquée au moins localement sur le dessous du fond (2) de l'ustensile de cuisine (1) lors du procédé de projection de gaz froid ou un métal d'apport ou une couche de métal (5) apte au brasage est appliquée lors du procédé de projection de gaz froid et une plaque ferromagnétique (4) est brasée et **en ce que** la couche appliquée par le procédé de projection de gaz froid est directement projetée sur la surface de fond polie.

2. Procédé selon la revendication 1, **caractérisé en ce qu'**un alliage de zinc-aluminium ou un alliage de zinc-aluminium-cuivre est choisi comme métal d'apport.

3. Procédé selon la revendication 1, **caractérisé en ce que** du cuivre, du laiton, du bronze, de l'étain ou un alliage d'étain est appliqué par projection comme métal apte au brasage.

4. Procédé selon l'une quelconque des revendications 1 à 3, **caractérisé en ce que** la surface globale de fond est recouverte de métal d'apport ou du matériau apte au brasage ou directement par le matériau ferromagnétique par projection de gaz froid.

5. Procédé selon l'une quelconque des revendications 1 à 4, **caractérisé en ce que** la couche de métal appliquée lors du procédé de projection de gaz froid et/ou la plaque ferromagnétique brasée n'est appliquée que sur des zones partielles du fond (2) et d'autres zones de celui-ci sont laissées libres.

6. Procédé selon l'une quelconque des revendications 1 à 5, **caractérisé en ce que** plusieurs pièces en forme de plaque en matériau ferromagnétique sont brasées sur la couche de métal (5) apte au brasage appliquée lors du procédé de projection de gaz froid et forment dans l'ensemble une plaque (4) à plusieurs pièces en matériau ferromagnétique.

7. Ustensile de cuisson (1) en aluminium ou en alliage d'aluminium pour une cuisinière à induction, produit par un procédé selon l'une quelconque des revendications 1 à 6, **caractérisé en ce qu'**une couche (4) ferromagnétique appliquée par projection de gaz froid d'épaisseur suffisante ou une couche (5) appliquée par projection de gaz froid en un métal d'apport ou matériau apte au brasage est prévue sur le dessous de son fond (2), sur laquelle est/sont brasée(s) une plaque (4) ou des pièces de plaque en matériau ferromagnétique.
